# EUROPEAN PATENT APPLICATION

(11) **EP 4 782 088 A1**
(43) Date of publication of application: **29.07.2026**
(21) Application number: 25153914.4
(22) Date of filing: 24.01.2025
(51) Int. Cl.: B01D 53/14, B01D 53/32

(54) **CAPTURE OF CARBON DIOXIDE**

(71) Applicant: SCW Systems B.V., 1812 PS Alkmaar (NL)
(72) Inventor: Essing, Gerardus Cornelis Otto Bernard, 1812 PS Alkmaar (NL); Hauwert, Peter, 1812 PS Alkmaar (NL)
(74) Representative: De Vries & Metman

(57) **Abstract**

Process of capturing carbon dioxide. Air is scrubbed with a basic solvent, thereby forming a solution comprising bicarbonate anions. This solution is then passed through an anion exchange resin at least partly loaded with hydroxide anions. The anion exchange resin is then desorbed with a solution of an alkali metal salt. CO₂ is released by treating the aqueous bicarbonate solution an acidic solution while forming an solution of an alkali metal salt. This solution is treated by EBDM to regain the alkali metal hydroxide solution and the acid used for the CO₂ release. The desorbed anion exchange resin is regenerated by flushing it with the alkali metal hydroxide solution EDBM.

## Description

### TECHNICAL FIELD

The present disclosure relates to the capture of carbon dioxide from a gas, such as ambient air or a flue gas. Direct Air Capture, or DAC, is the separation of carbon dioxide from ambient air.

### BACKGROUND

Carbon dioxide can be separated from flue gas or ambient air using an aqueous alkaline solution or sorbents. In many cases, these sorbents are subsequently regenerated and stripped of carbon dioxide through the application of heat. The released carbon dioxide can then be collected and optionally compressed and the regenerated sorbent can be recycled for reuse. All these steps consume energy. Typically, the amount of energy for regeneration of the sorbent is more than the amount of energy needed for capturing the carbon dioxide.

WO 2023/147101 A1 discloses a process of post-combustion capturing carbon dioxide from flue gases with a relatively high carbon dioxide concentration. In this process, carbon dioxide is captured in a scrubber by an alkaline solution, thereby producing an alkali carbonate solution, that is subsequently reacted with an acid reagent to regenerate the carbon dioxide and a resultant salt solution. Electrodialysis with bipolar membrane separation is used to convert the salt solution to regenerate the acid reagent and the alkaline solution, which is then recycled as the scrubbing solution to capture further carbon dioxide. This system is not efficient for capturing very dilute concentrations of carbon dioxide, such as with ambient air, and is therefore not suitable for DAC. Initially, the scrubbing solution captures carbon dioxide in the form of carbonates and has to be pumped around a number of times. This requires large amounts of acid for the release of carbon dioxide and also results in evaporation of the aqueous solution and gradual reduction of the pH of the alkaline solution, so scrubbing becomes less effective in the course of the process. Furthermore, recirculation of the alkali metal salt solution requires a high energy consumption.

It is an object to provide an economic carbon dioxide capturing process, that is particularly suitable for capturing low concentrations of carbon dioxide, such as with DAC.

### SUMMARY

The object is achieved with a process of capturing carbon dioxide from a gas, such as flue gas or ambient air, the process comprising the following steps:
- in a CO₂-capturing step, scrubbing the gas with a basic solvent, thereby forming a solution comprising bicarbonate anions;
- in a solvent regeneration step, passing the solution comprising bicarbonate anions through an anion exchange resin at least partly loaded with hydroxide anions, thereby forming a regenerated basic solvent and an anion exchange resin loaded with the bicarbonate anions;
- in a desorption step, treating the anion exchange resin at least partly loaded with the bicarbonate ions with an aqueous solution comprising an alkali metal salt, thereby forming an aqueous solution comprising an alkali metal bicarbonate and a desorbed anion exchange resin at least partly loaded with anions of the alkali metal salt;
- in a CO₂ release step, treating the aqueous solution comprising the alkali metal bicarbonate with an acidic solution to release CO₂ while forming an aqueous solution comprising an alkali metal salt; and
- in an electrodialysis step, performing electrodialysis on the aqueous solution comprising the alkali metal salt to form an aqueous alkali metal hydroxide solution that is recycled as the aqueous alkali metal hydroxide solution used in the resin regeneration step, and an aqueous acidic solution that is recycled as the aqueous acidic solution used in the CO₂ release step;
- in a resin regeneration step, regenerating the desorbed anion exchange resin by flushing it with the aqueous hydroxide solution at least partly resulting, directly or indirectly, from the electrodialysis step to form an aqueous solution comprising the alkali metal salt used in the desorption step.

The process of the present disclosure is a very economic process only requiring salt and electricity, without adding energy by heat or pressure. Carbon dioxide is captured and released purely chemically.

The process forms an alkali metal salt which is recycled for desorption of the anion exchange resins, and which can efficiently be converted into alkaline and acidic solutions using electricity only.

The gas can be a flue gas or air. Accordingly, the gas may have a CO₂-concentration of 500 ppm CO₂ or less, optionally a CO₂-concentration of from 400 to 450 ppm CO₂. This will normally be the case when the gas is air. The gas may also have a CO₂-concentration of 1,000 ppm CO₂ or more, such as a CO₂-concentration of from 10,000 to 250,000 ppm CO₂. It has been found that the process as disclosed herein is particularly suitable for direct air capture, i.e. when the gas is air.

A substantial part of the captured carbon dioxide is captured as a bicarbonate, rather than as a carbonate. The benefit thereof is that the required molar amount of acid is only half of the molar amount that would be needed for carbonates, resulting in only half the amount of salt and hence only half the amount of energy required for the electrodialysis step.

Further energy efficiency is being achieved in the electrodialysis step by the fact that the alkali metal hydroxide and acid solutions may have relatively low concentrations of acid and base. In prior art processes a low concentration base would not be able to achieve high carbon dioxide capture rates, in particular not with dilute carbon dioxide concentrations as is the case in ambient air. The present process uses a novel combination of a liquid solvent in combination with a solid sorbent. Particularly, the combination uses anion exchange resins in an intermediate step to bridge the use of a highly selective solvent which removes carbon dioxide as a bicarbonate and then passes the captured carbon dioxide over to a solid sorbent, which is the anion exchange resin. This resin then functions as a buffer which can be patiently stripped of the bicarbonate and regenerated using the low concentration acid and base.

The basic solvent can for example be an aqueous solution comprising one or more amines, e.g., one or more tertiary amines. Suitable examples of tertiary amines include tertiary amines selected from the group comprising compounds according to the formula NR1R2R3, wherein each R1, R2 and R3 is independently C(1-10)alkyl, C(5-6)cycloalkyl, C(5-6)heterocycloalkyl, C(6-10)aryl, C(6-10)heteroaryl, C(6-10)aryl-C(1-3)alkyl, each optionally substituted with one or more hydroxy groups. More particularly, the tertiary amine may be selected from the group comprising straight chain trialkylamines, including trimethylamine, triethylamine, tripropylamine, tributylamine, tripentylamine, trihexylamine, triheptylamine and trioctylamine and branched chains including tris(2-ethylhexyl)amine and mixtures thereof. Further examples of suitable tertiary amines include cyclic tertiary amines, such as cyclic tertiary amines selected from the group consisting of compounds of the formula NR4R5R6, wherein R4 and R5 are fused and form a five- or six-membered heterocyclic ring optionally substituted with one or more hydroxy or methyl groups, and wherein R6 is a C(1-4) alkyl. For example, cyclic tertiary amines may be selected from the group consisting of compounds of the formula NR4R5R6, wherein R4 and R5 are fused and form a pyrrolidine, piperazine or morpholine group, optionally substituted with one or more, and wherein R6 is a C1 - C4 linear or branched alkyl group. More particularly, the cyclic tertiary amine may be N-methylpyrrolidine, N-methylpiperidine, N-methylmorpholine, N-ethylpyrrolidine, N-ethylpiperidine, N-ethylmorpholine, N-(iso)propylpiperidine, N-(iso)propylpyrrolidine, N-(iso)propylmorpholine, N-(iso)butylpiperidine, N-(iso)butylpyrrolidine, N-(iso)butylmorpholine, 1,2,2,6,6-pentamethylpiperidine or a combination thereof. Further examples of suitable tertiary amines include quinuclidine, 1-azaadamantane, 7-methyl-1,5,7-triazabicyclo[4.4.0]dec-5-ene, 1,8-diazabicyclo[5.4.0]undec-7-ene, 1,5-diazabicyclo[4.3.0]non-5-ene, and 1,4-diazabicyclo[2.2.2]octane.

Besides tertiary amines, the solvent may also contain or be composed of primary or secondary amines, e.g., in which the steric hindrance around the amine center favours formation of (bi)carbonate species over carbamate species. Suitable examples of sterically hindered amines are selected from the group consisting of compounds of the formula NR1R2R3 where R1 is an H, R2 is either H or a small alkyl groups. R3 can be each of the substituents mentioned above, or a hydroxyl-substituted variation thereof. More particularly, the sterically hindered amines can be tert-butylamine and/or 2-amino-2-methyl-1-propanol.

The pH of the basic solvent can for example be from pH 6,5 to pH 11, or from pH 8,5 to pH 10,5, so as to promote the formation of bicarbonate anions.

Any suitable anion exchange resin can be used in the process disclosed herein. For example, the anion exchange resin may be a type-I anion exchange resin, wherein the type-I anion exchange resin comprises -N⁺(CH₃)₃ cationic groups, or a type-II anion exchange resin, wherein the type-II anion exchange resin comprises -N+(CH₃)₂C₂H₄OH cationic groups. Such anion exchange resins are commercially available. Suitable anion exchange resins include anion exchange resins from the Amber series by DuPont^{™} (i.e., AmberLite^{™} anion exchange resins).

The polyamine can for example be a homopolymer, a copolymer, or a block polymer. The polyamine typically comprises at least one monomer having an amine group, such as a primary, secondary, or tertiary amine group. The amine group may be part of or a substituent of a hydrocarbyl group. For example, the amine can be a substituent of a phenyl group of one of the monomers comprising the polymer. The polymer can for example be or comprise a vinyl polymer comprising a phenyl group having an amine group, e.g., a primary amine group.

The polymer may further comprise at least one monomer with a linear, branched, or cyclic hydrocarbyl group, e.g., comprising up to about 30 carbon atoms. The hydrocarbyl group can be selected from a substituted or unsubstituted alkyl group, a substituted or unsubstituted alkenyl group, a substituted or unsubstituted phenyl group, a substituted or unsubstituted aryl group, or a substituted or unsubstituted heteroaryl group. The polyamine can be a bis-polyamine, e.g., a bis-picolylamine, crosslinked styrene-based polymer (e.g., macroporous polystyrene crosslinked with divinylbenzene), and/or an acrylate-based copolymer.

The molecular weight Mw of the polymer can for example be about 10,000 g/mol or more.

The metal polyamine complex may be in the form of a substrate or a granulate having the shape of beads, pellets, strips, strings, or the like, or have an irregular shape or regular shape with irregularities. Optionally, the metal polyamine complex can be adapted for attachment to a substrate, such as wiring, a mesh, a sieve, a surface, or the like.

The anion exchange resin can for example be at least partially formed from one or more of the polyamines described above. The anion exchange resin can for example contain a gel phase. The anion exchange resin can for example be microporous.

The anion exchange resin may be strong base anion exchange resin or weak base anion exchange resin. The resin matrix of weak base anion-exchange resins may contain a basic, non-ionic functional group, e.g., primary, secondary, or tertiary amine groups. These may be aliphatic, aromatic, heterocyclic or cycloalkane amine groups. The amines can be selected from alpha-dipyridyl, guanidine, dicyanodiamidine groups, or combinations thereof. Other nitrogen-containing basic, non-ionic functional groups include nitrite, cyanate, isocyanate, thiocyanate, isothiocyanate, and isocyanide groups. Pyridine groups may also be used. Strong base anion exchange resins can be formed of polymers having mobile anions, such as hydroxide and the like, associated for example with covalently bonded quaternary ammonium, phosphonium or arsonium groups or tertiary sulfonium groups.

The process comprises two loops: a first loop allowing continuous regeneration of the basic solvent, and a second loop for release of captured carbon dioxide from the bicarbonate adsorbed on the anion exchange resin and regeneration of the anion exchange resin. To allow continuous running of the two loops, the anion exchange resin can be one of a pair of anion exchange resins, alternatingly used in the solvent regeneration step, and in the resin regeneration step, respectively. When the anion exchange resin in the solvent regeneration step exceeds a limit value of saturation by bicarbonate anions, it can be swapped with the anion exchange resin in the desorption and resin regeneration steps.

In the desorption step, the anion exchange resin is flushed or washed with an aqueous desorption solution comprising one or more alkali metal salts, in particular of an alkali metal salt comprising an anion with stronger bonding to the anion exchange resin than bicarbonate but with less bonding to the anion exchange resin than hydroxide. Particular examples of a suitable desorption solution include aqueous solutions of an alkali metal halide, alkali metal nitrate, an alkali metal sulphate, an alkali metal lactate, or any combination of two or more thereof. For example, the suitable desorption solution may be an aqueous solution comprising sodium chloride, sodium nitrate, sodium sulphate, sodium lactate, potassium chloride, potassium sulphate, potassium nitrate, potassium lactate, or any combination of two or more thereof. The desorption step results in an anion exchange with the sorbent, and in a spent desorption solution containing the bicarbonate anions and possibly carbonate anions. Due to the high concentration of bicarbonate anions on the anion exchange resin, it is sufficient to use a desorption solution with a low salt concentration, e.g., at most 0,5 mol per liter, e.g., at most 0,05 mol per liter, e.g. at least 0,05 mol per liter, e.g., 0,1 - 0,25 mol per liter. Higher concentrations can also be used but lead to higher energy consumption in the electrodialysis step.

Flushing the anion exchange resin with the aqueous desorption solution, binds the anion of the aqueous desorption solution to the anion exchange resin. To regenerate the anion exchange resin, and prepare it for use in a next carbon dioxide capture cycle, the anion of the aqueous desorption solution can be replaced with hydroxide anions by contacting the sorbent with the aqueous hydroxide solution. The aqueous hydroxide solution can for example be or comprise sodium hydroxide, potassium hydroxide, rubidium hydroxide, calcium hydroxide, strontium hydroxide, barium hydroxide, lithium hydroxide, or mixtures thereof.

The replaced anions of the desorption solution combine with the cations of the hydroxide solution to form an aqueous salt solution. Provided that the aqueous hydroxide solution comprises the same cations as the desorption solution, the aqueous salt solution can be recycled as fresh desorption solution. For example, the cations of the hydroxide solution and the cations of the desorption solution may all be (the same) alkali metal salts, in particular sodium salts or potassium salts.

In the CO₂ release step, the aqueous solution comprising alkali metal bicarbonate produced in the desorption step is reacted with an acidic solution to release carbon dioxide and to form the aqueous solution comprising an alkali metal salt, e.g., as used in the desorption step. To this end an acid can be used with the same anion as the anion in the aqueous alkali metal salt solution used in the desorption step. Suitable acids include organic or inorganic acids. Specific examples include sulfuric acid, nitric acid, lactic acid and hydrogen halides, in particular hydrochloric acid, or mixtures thereof. The aqueous solution comprising the alkali metal salt that is formed in the CO₂-release step may have a pH of 6 or less, optionally a pH of 4 or less, e.g., a pH of 2 or less. If for example hydrochloric acid us used, the pH can be in the range of, e.g., 0,5 - 1. Low pH values contribute to an improved release of CO₂ from the aqueous solution comprising the alkali metal bicarbonate.

The electrodialysis step can be carried out in an electrodialysis reactor with bipolar membranes (EDBM).

For example, if a sodium chloride solution is used as the desorption solution in the desorption step, sodium bicarbonate will be the main solute in the spent desorption solution. Using hydrochloric acid in the release step will regenerate a sodium chloride solution, which can be converted by EDBM into sodium hydroxide and hydrochloric acid. The regained sodium hydroxide solution can be recycled to regenerate the sorbent in the regeneration step. The regained hydrochloric acid solution can be recycled for use as the acidic solution in the release step.

The EDBM unit can comprise one or more EDBM stacks, each stack comprising multiple membrane cell pairs. These cell pairs can for example create a 2 or 3 flow cell. In a specific example, the 3 flow EDBM cell includes at least one cation exchange membrane, at least one bipolar membrane, and at least one anion exchange membrane located between an anode and a cathode. In a specific embodiment, a 2 flow EDBM cell may include ate least one cation exchange membrane and at least one bipolar membrane, located between an anode and a cathode.

One or more of the 3 flow EDBM cells may have at least one acid compartment, at least one base compartment and at least one salt compartment. The base compartment can for example be the space between a cation exchange membrane and an adjacent bipolar membrane that is proximately located on the cathode side of the cation exchange membrane. The acid compartment can for example be the space between the anion exchange membrane and an adjacent bipolar membrane proximately that is located on the anode side of the cation exchange membrane.

The EDBM unit can for example have a two-compartment configuration or a three-compartment configuration. A 2 flow cell with a cation exchange membrane potentially requires less energy, while still producing a base with little salt and an acid with more salt.

Optionally, the EDBM unit can have a current density in the range of 50 to 1000 A/m2, e.g., below about 200 A/m2.

The EBDM unit can for example have a current efficiency of at least 50 - 100 %.

### BRIEF DESCRIPTION OF THE DRAWINGS

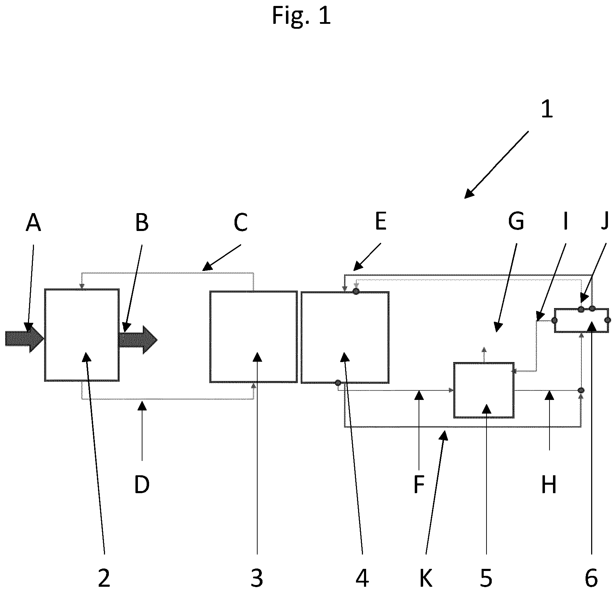

The above-described aspects will hereafter be more explained with further details and benefits with reference to Figure 1 showing a flow chart of an exemplary embodiment of the disclosed process.
The flow chart of Figure 1 shows a process 1 of capturing carbon dioxide from a gas, such as flue gas or ambient air. A direct air capture unit 2 has an inlet for a flow A of ambient air, and an outlet for a flow B of air at least partly stripped of its carbon dioxide content. The direct air capture unit 2 has a packing to enhance the vapor-liquid contact surface area.

The direct air capture unit 2 further has an inlet for a supply flow C of a basic solvent, such as a tertiary amine, e.g., at a top side of the direct air capture unit 2, and an outlet for a flow D of spent solvent with captured carbon dioxide dissolved in it as bicarbonate anions.

The flow D of spent solvent is passed through a first anion exchange unit 3 filled with beads of an anion exchange resin complexed with hydroxide anions. The bicarbonate anions are absorbed by the anion exchange resin while the hydroxide anions are released from the anion exchange resin. The regenerated basic solvent is then recycled with the flow C to the direct air capture unit 2.

When the anion exchange resin reaches a predefined degree of bicarbonate saturation, it is swapped with a regenerated second anion exchange resin of an anion exchange unit 4 in a next loop, where it is flushed with a flow E of an alkali metal salt solution, such as potassium chloride, in a desorption step. The bicarbonate anions ions are exchanged with the chloride anions of the potassium chloride solution, resulting in a flow F of an aqueous solution comprising potassium bicarbonate to a bath 5 of an aqueous hydrochloric acid solution. Here, the bicarbonate reacts with the hydrochloric acid to form an aqueous solution comprising potassium chloride (flow H) while releasing carbon dioxide (discharge flow G).

The released carbon dioxide can be released in a very pure form and can be used for further processing, e.g., for permanent sequestration, e.g., for geological storage or in building materials or road construction materials, or as a feedstock for synthetic e-fuels, such as e-methane, e-methanol and/or e-kerosine.

The aqueous potassium chloride solution formed in the CO₂ release step, is fed to a 3-flow EDBM reactor 6, which splits it into an aqueous solution comprising hydrochloric acid (flow I) and an aqueous solution comprising potassium hydroxide (flow J), while part of the alkali metal salt solution is maintained and recycled in flow E during a next desorption step. The aqueous hydrochloric acid solution is recycled to the acid bath of the CO₂ release step, while the potassium hydroxide solution is used to regenerate the anion exchange resin in a regeneration step after the desorption step (flow J). In this regeneration step, the chloride anions absorbed on the anion exchange resin are exchanged with the hydroxide anions, resulting in an aqueous solution comprising potassium chloride (flow K), returned to the EDBM 6 or it can be used in the desorption step.

As used herein, "C(x-y)alkyl" refers to an alkyl group having x to y carbon atoms in a linear or branched arrangement. For example, the term "C(1-5)alkyl" refers to an alkyl having 1 to 5 carbon atoms, i.e. to methyl, ethyl, propyl, butyl, and pentyl groups.

As used herein, "C(x-y)aryl" refers to an aromatic hydrocarbon group (monocyclic as well as a bicyclic fused ring) having x-y carbon atoms, for example phenyl (C(6)aryl) or naphthyl (C(10)aryl)). All carbon atoms may optionally be substituted with one or more halogen, methyl, hydroxy or methoxy.

As used herein, "C(x-y)heteroaryl" refers to a monocyclic or bicyclic aromatic group having x-y carbon atoms in which at least one of the carbon atoms has been replaced by a heteroatom independently selected from oxygen, nitrogen or sulphur. All carbon atoms may optionally be substituted with one or more halogen, methyl, hydroxy or methoxy.

As used herein, "C(x-y)cycloalkyl" refers to a saturated cyclic, bicyclic or tricyclic hydrocarbon having 3-6 carbon atoms, including fused or bridged ring systems and spirocyclic groups. All carbon atoms may optionally be substituted with one or more halogen, hydroxy or methyl.

As used herein, "C(x-y)heterocycloalkyl" refers to a saturated cyclic hydrocarbon having x-y carbon atoms in which at least one of the carbon atoms has been replaced by a heteroatom independently selected from oxygen, nitrogen or sulphur. All carbon atoms may optionally be substituted with one or more halogen, hydroxy or methyl.

As used herein, "C(x-y)heteroaryl" refers to a monocyclic or bicyclic aromatic group having x-y carbon atoms in which at least one of the carbon atoms has been replaced by a heteroatom independently selected from oxygen, nitrogen or sulphur. All carbon atoms may optionally be substituted with one or more halogen, methyl, hydroxy or methoxy.

As used herein, "C(x1-y1)aryl-C(x2-y2)alkyl" refers to a C(x1-y1)aryl group attached to a C(x2-y2)alkyl group, both with the same meaning as previously defined. For example, "C(6-10)aryl-C(1-3)alkyl" refers to a C(6-10)aryl group attached to a C(1-3)alkyl group.

## Claims

1. Process of capturing carbon dioxide from a gas mixture, such as flue gas or ambient air, the process comprising the following steps:
- in a CO₂-capturing step, scrubbing the gas with a basic solvent, thereby forming a solution comprising bicarbonate anions;
- in a solvent regeneration step, passing the solution comprising bicarbonate anions through an anion exchange resin at least partly loaded with hydroxide anions, thereby forming a regenerated basic solvent and an anion exchange resin at least partly loaded with the bicarbonate anions;
- in a desorption step, treating the anion exchange resin at least partly loaded with the bicarbonate ions with an aqueous solution comprising an alkali metal salt, thereby forming an aqueous solution comprising an alkali metal bicarbonate and a desorbed anion exchange resin at least partly loaded with anions of the alkali metal salt;
- in a CO₂ release step, treating the aqueous solution comprising the alkali metal bicarbonate with an aqueous acidic solution to release CO₂ while forming an aqueous solution comprising an alkali metal salt; and
- in an electrodialysis step, performing electrodialysis on the aqueous solution comprising the alkali metal salt to form an aqueous alkali metal hydroxide solution that is used in the resin regeneration step and an acid that is recycled to form the aqueous acidic solution used in the CO₂ release step;
- in a resin regeneration step, regenerating the desorbed anion exchange resin by flushing it with the aqueous alkali metal hydroxide solution at least partly resulting from the electrodialysis step to form the aqueous solution comprising the alkali metal salt used in the desorption step.

2. Process according to claim 1, wherein the basic solvent comprises an amine.

3. Process according to claim 2, wherein the amine is a tertiary amine and/or a sterically hindered primary amine.

4. Process according to claim 3, wherein the tertiary amines is one or more selected from the group consisting of
compounds according to the formula NR1R2R3, wherein each R1, R2 and R3 is independently C(1-10)alkyl, C(5-6)cycloalkyl, C(5-6)heterocycloalkyl, C(6-10)aryl, C(6-10)heteroaryl, C(6-10)aryl-C(1-3)alkyl, each optionally substituted with one or more hydroxy groups;
cyclic tertiary amines selected from the group consisting of compounds of the formula NR4R5R6, wherein R4 and R5 are fused and form a five- or six-membered heterocyclic ring optionally substituted with one or more hydroxy or methyl groups, and wherein R6 is a C(1-4)alkyl;
quinuclidine and 1-azaadamantane, 7-methyl-1,5,7-triazabicyclo[4.4.0]dec-5-ene, 1,8-diazabicyclo[5.4.0]undec-7-ene, 1,5-diazabicyclo[4.3.0]non-5-ene, and 1,4-diazabicyclo[2.2.2]octane.

5. Process according to any one of the preceding claims, wherein the basic solvent further comprises water.

6. Process according to any one of the preceding claims, wherein the basic solvent has a pH of from 6,5 to 11.

7. Process according to claim 6, wherein the basic solvent has a pH of from 8,5 to 10,5.

8. Process according to any one of the preceding claims, wherein the anion exchange resin is selected from the group comprising:
a polymer comprising one or more amine groups complexed with a transition metal selected from nickel, zinc, copper, and/or cobalt;
a type-I anion exchange resin, wherein the type-I anion exchange resin comprises -N⁺(CH₃)₃ cationic groups; and
a type-II anion exchange resin, wherein the type-II anion exchange resin comprises -N+(CH₃)₂C₂H₄OH cationic groups

9. Process according to any one of the preceding claims, wherein the anion exchange resin is one of a pair of anion exchange resins, alternatingly used in the solvent regeneration step, and in the resin regeneration step, respectively.

10. Process according to any one of the preceding claims, wherein the electrodialysis step is carried out in an electrodialysis reactor with bipolar membranes.

11. Process according to any one of the preceding claims, wherein the acidic solution used in the CO2-release step is sulfuric acid, nitric acid, lactic acid and hydrogen halides, or mixtures thereof, in particular hydrochloric acid; and
the acid formed in the electrodialysis step is the same acid or mixture thereof.

12. Process according to any one of the preceding claims, wherein the gas has a CO₂-concentration of 500 ppm CO₂ or less, optionally a CO₂-concentration of from 400 to 450 ppm CO₂.

13. Process according to any one of the preceding claims, wherein the aqueous solution comprising the alkali metal salt that is formed in the CO₂-release step may have a pH of 6 or less, optionally a pH of 4 or less.

14. Process according to any one of the preceding claims, wherein the CO₂ released in the CO₂ release step is used in the manufacture of a synthetic e-fuel, optionally e-methane, e-methanol, or e-kerosine.
